# EUROPEAN PATENT APPLICATION

(11) **EP 2 083 251 A1**
(43) Date of publication of application: **29.07.2009**
(21) Application number: 08171486.7
(22) Date of filing: 12.12.2008
(51) Int. Cl.: G01F 15/14

(54) **A consumption meter with at least two casing parts**

(30) Priority: 13.12.2007 EP 07123132
(71) Applicant: KAMSTRUP A/S, 8660 Skanderborg (DK)
(72) Inventor: Skallebæk, Anders, 8660 Skanderborg (DK); Drachmann, Jens, 8260 Viby J (DK); Laursen, Peter Schmidt, 8660 Skanderborg (DK)
(74) Representative: Plougmann & Vingtoft A/S

(57) **Abstract**

The present invention relates to a consumption meter with at least two casing parts, the consumption meter is a meter, such as an ultrasonic flow meter, for measuring a quantity value corresponding to a consumed quantity, e.g. hot or cold water. The consumption meter comprises a measuring means for measuring the quantity value, an electronic circuit for operating the consumption meter and a casing for housing the measuring means and the electronic circuit. The casing comprises a first polymer-based casing part having a first water permeability and an at least second casing part having an at least second water permeability, the first polymer-based casing part enveloping the second casing part, and wherein the at least second water permeability is lower than the first water permeability.

## Description

### FIELD OF THE INVENTION

The present invention relates to a consumption meter for measuring a quantity value.

### BACKGROUND OF THE INVENTION

A consumption meter converts a measured quantity value to a consumed quantity. As an example, an ultrasonic flow meter may measure a time delay between counter-propagating ultrasonic waves in a medium flow, in order to determine a corresponding consumption of the medium, such as a consumption of hot or cold water.

A consumption meter is typically an advanced piece of equipment which may comprise delicate electronic equipment as well as delicate mechanical equipment in order to accurately determine the consumed quantity.

In some applications, the consumption meter needs to operate in potentially harmful conditions, such as conditions where it may be exposed to water or moist, e.g. in the form of condense. In addition, the consumption meter may also be exposed to particle dust or other potentially harmful materials. As an example, a consumption meter for measuring consumed cold water where the consumption meter is operating in a warm location is typically exposed to condense water.

A known way of rendering consumption meters robust to penetration of water and dust is to provide a hermetically sealed casing for sealing off the internal parts of the meter. However, hermetically sealed casings are often costly to mount, and typically include parts, such as gaskets, fittings, etc. that also adds to the cost of the meter. Moreover, such devices may be difficult to operate, due to limitations set by the hermetically sealed casing.

Hence, an improved consumption meter would be advantageous, and in particular it would be advantageous to provide a consumption meter which is cost-efficient to fabricate and which is capable of operating in a wet, moist or dusty environment or in an environment where the consumption meter is exposed to temperature differences.

### SUMMARY OF THE INVENTION

In particular, it may be seen as an object of the present invention to provide a consumption meter that is robust to operating in a wet, moist or dusty environment or an environment where the consumption meter is exposed to temperature differences, which is still cost efficient and simple to fabricate. It is a further object of the present invention to provide an alternative to the prior art.

Thus, the above-described object and several other objects are intended to be obtained in a first aspect of the invention by providing a consumption meter for measuring a quantity value corresponding to a consumed quantity, the consumption meter comprising
- a measuring means for measuring the quantity value;
- an electronic circuit for operating the consumption meter; and
- a casing for housing the measuring means and the electronic circuit;
wherein the casing comprising a first polymer-based casing part having a first water permeability and an at least second casing part having an at least second water permeability, the first polymer-based casing part enveloping the second casing part, and wherein the at least second water permeability is lower than the first water permeability.

A polymer material is at least to some extend permeable to water. Thus for prolonged use, such as use up to many years, water from the surroundings may penetrate a polymer material. A consumption meter with a simple polymer-based casing is therefore prone to water exposure, and any metallic parts inside the casing is thereby prone to corrosion and other problems which may cause operational problems of the consumption meter.

A polymer-based consumption meter is nevertheless still a very attractive material regarding production costs.

By encapsulating the measuring means and the electronic circuit in a casing comprising at least two components, where the at least the first component is a polymer-based component, and wherein the water permeability of the first and the at least second casing parts are adjusted so that the water permeability of the second casing part is lower than the water permeability of the first casing part, a consumption meter may be provided which is cost-effective to fabricate since the first casing part is polymer based, and which seal off electrical elements from any potentially harmful moist exposure, and even dust, from the surroundings. Especially a consumption meter is provided which is not influenced by condense water, which is not affected by dust, etc. for prolonged use, such as more that 10 years, 15 years or even 20 years. The expected life-span for the consumption meter may thereby be so long that an interchanging of the entire consumption meter is more advantageous than to interchange specific elements, such as a battery, of the consumption meter, since it is more cost-efficient with respect to fabrication, storage as well as the time it takes to replace the entire consumption meter as compared to repairing the meter.

By having a first polymer-based casing part with a first water permeability and an at least second casing part with a lower second water permeability, the water permeability is given by the combination of the casing parts. The material of first polymer-based casing part may therefore by chosen on such requirements as robustness with respect to general handling of the consumption meter, and the desired water permeability may be obtained by a proper choice of the at least second casing part. Thus a consumption meter may be provided which do not require a cover separate from the casing of the meter in order to be robust to general handling of the meter.

At least two casing parts may be provided, however for some applications it may be advantageous to provide more than two casing parts, such as at least three, or even more, such a stack of casing parts. In an exemplary embodiment, the stack of casing parts may comprise alternating layers of at least two different materials. By providing a number of layers an extremely low total or overall water permeability may be obtained. Moreover, a given total or overall water permeability may even be provided by proper selection of the number of layers as well as the nature of the layers.

In an embodiment, the permeability is the permeability with respect to further given species, in such embodiments, the permeability of further casing parts are lower with respect to the given species while maintaining the low water permeability. For example in a three component casing, the first polymer-based casing part has a specific permeability of water *and* oxygen. The second casing part has a permeability which is lower for water, whereas the third casing part has a permeability which is lower for oxygen. Such embodiments may be advantageous for materials which have a large difference in the permeability for different species.

In general, the at least second water permeability may be 10 times lower than the first water permeability, such as between 10 and 100 times, such as between 25 and 75 times, such as 50 times, or even more than 100 times lower. In general, the water permeability ratio between the first and the at least second casing part is determined from a compromise between as high a ratio as possible and other factors relating to the choice of materials for the consumption meter.

As an example, the material of the first casing part may be selected as a material with a water permeability coefficient that is less than 1 gram per day per millimetre thickness per square meter (1 g mm / m² day).

In an advantageous embodiment, the material of the first casing part is a fibre reinforced polymer material, such as a composite polymer material comprising fibres. In general any suitable fibre reinforcement may be applied, such as a reinforced polymer composite comprising such fibres as glass-fibres, carbon fibres, including carbon nano tube based fibres and mineral fibres. It is an advantage to reinforce the first polymer based casing part, in order to improve the strength of the casing of the consumption meter. The polymer material may comprise between 1% and 60% fibre material, such as between 5% and 40% fibre material, such as between 10% and 30% fibre material, such as 20% fibre material.

In embodiments, the first casing part comprises a material selected in the group of: PolyPhenylene Sulfide (PPS), Polyether Sulphone (PSU), PolyPhenylene Sulfone (PPSU), PolyPhenylene Oxide (PPO), PolyStyrene (PS), PolyEthylene Imine (PEI), PolyButylene Terephthalate (PBT), Parylene, Polyester, Acrylonitrile Butadiene Styrene (ABS), PolyButylene Terephthalate (PBT), Liquid Crystal Polymer (LCP), CycloOlefin Copolymer (COC), PolyMethyl MethAcrylate (PMMA), PolyPropylene (PP), PolyEthylene (PE), PolyTetraFluoroEthylene (PTFE), PolyPhenylene Ether (PPE), PolyStyrene (PS), PolyCarbonate (PC), PolyEtherImide (PEI), PolyEtherEtherKetones (PEEK), Polyethylene Terephtalate (PET), PolyAmide (PA), Thermoplastic Polyurethane (TPU) and blends thereof.

At least PPS is very stable under prolonged water exposure, it has a low water permeability and it is a fairly strong material, as compared to other polymer materials.

In general other polymer materials may be used. A material may be selected based on a compromise between such properties as: stable in water, strong, shape stable, low absorption of water, low water permeability, price, and stable in sunlight.

In an embodiment, a material selected form the above listed group may be reinforced by a fibre-based material.

In an advantageous embodiment, the first casing part is made in a mouldable polymer material, such as in a thermo-plastic material or other suitable mouldable materials.

In an advantageous embodiment, the second casing part is a coating of the first casing part. In an exemplary embodiment the coating is done by a thin film deposition technique, including but not limited to dipping, painting, spraying, laminating, atomic layer deposition (ALD), molecular beam epitaxy (MBE), chemical vapour deposition (CVD, PE-CVD, etc.), physical vapour deposition (PVD) and pulsed laser deposition (PLD). The specific deposition technique may be selected in accordance with desired material choices.

In advantageous embodiments, the coating may be by a layer selected from the group of: a layer of paint, a layer of rubber, a layer of tar, a layer of paint comprising a filler material, a layer of glass material, a layer of metal, a layer of ceramic, a layer of polymer, a layer of resin, a layer of metal-oxide, a layer of silicon oxide. The silicon oxide may either be mono-oxide, di-oxide, or a combination of different silicon oxides. The silicon oxide may be in any form, including but not limited to crystalline, semi-crystalline and amorphous, and a layer of silicon nitride on the general form of SiₓO_{y}N_{z}.

In an exemplary embodiment, the coating is done in a second moulding step. By performing the coating in a second moulding step, the first casing part may be used as the mould. The at least second casing part therefore need not, but may be, of a mouldable material.

In an advantageous embodiment the second casing part comprises a metal foil. In an exemplary embodiment, the second casing part is a bag, such as a polymer-based bag coated with a metal film. Such bags are know in the food industry and used to avoid exposure of moist to bagged foodstuff.

In an advantageous embodiment, the casing may comprise a hydrophobic casing part or modified to be a hydrophobic material. The hydrophobic casing part may be provided onto an outside of the casing. A hydrophobic casing part may add to the sealing effect since water droplets will not easily remain on the surface.

In advantageous embodiments, the casing further houses a number of components including, but not being limited to: a power supply for powering the consumption meter, a transmitter for transmitting the quantity value, a display being operatively connected to the electronic circuit; an optical communication unit being operatively connected to the electronic unit. By providing one or more, or even all of such components inside the casing, the expected live-span of the consumption meter may increase, since these components are not exposed to moist or other materials.

In an embodiment comprising a metal layer as the second casing part, it may however not be possible to include the transmitter inside the casing, due to screening of electromagnetic radiation by the metal.

In an advantageous embodiment, the at least first polymer-based casing part comprises a transparent area, such as a window e.g. for providing visual access to a display or for providing an area for optical communication with the consumption meter.

The invention further relates to a flow meter for measuring a medium flow through a flow passage, the flow meter comprising a consumption meter according to the first aspect of the invention and a flow passage, the consumption meter being connected to the flow passage. The medium flow may be a flow of cold or hot water.

This aspect of the invention is a particularly, but not exclusively, advantageous application of the consumption meter.

In an advantageous embodiment, the consumption meter is an ultrasonic flow meter.

The first and second aspect of the present invention may each be combined with any of the other aspects. These and other aspects of the invention will be apparent from and elucidated with reference to the embodiments described hereinafter.

### BRIEF DESCRIPTION OF THE FIGURES

Embodiments of the invention will be described, by way of example only, with reference to the Figures, in which
FIG. 1 illustrates in a schematic perspective view a consumption meter in the form of a complete unit;
FIG. 2 shows a schematic cross-section of a front view of a consumption meter;
FIG. 3 illustrates an embodiment wherein multiple casing parts are present in the form of a stack of layers; and
FIG. 4 illustrates an embodiment wherein the second casing part comprises a metal foil in the form of a metal coated polymer-based bag.

### DESCRIPTION OF EMBODIMENTS

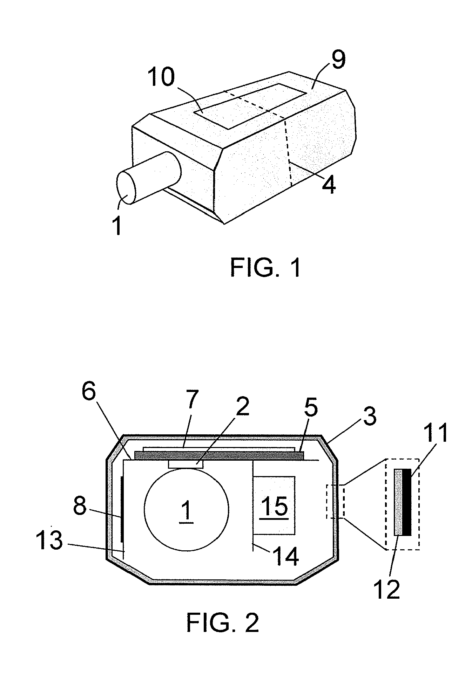

FIG. 1 illustrates in a schematic perspective view a consumption meter in the form of a complete unit, whereas FIG. 2 shows a schematic cross-section of a front view of a consumption meter, the cross-section of FIG. 2 may e.g. be obtained along the section indicated by reference numeral 4 on FIG. 1.

The consumption meters as illustrated in the figures are consumption meters in the form of an ultrasonic flow meter. Other types of consumption meters also fall under the scope of the invention.

The working principle of an ultrasonic flow meter is well known to the skilled person, and will not be elucidated upon in detail here. The flow meter comprises a flow passage 1 schematically illustrated by an axial tube. Ultrasonic transducers 2 for generating and detecting ultrasonic signals are placed so that the generated signals can be introduced into the measuring section. Reflectors (not shown) are placed inside the flow passage 1, so that the signals emitted from the transducers are directed in opposite directions along the flow passage, and directed onto the opposite transducer for detection.

In a typical determination of a fluid flow, ultrasonic signals are simultaneously emitted from the two ultrasonic transducers. Signals propagating upstream propagate faster than signals propagating downstream, and the flow rate can be determined by measuring difference in arrival time of the emitted signals at the other transducers. The determination of the flow rate, as well as the outputting of the flow rate may be done by an analogue or digital unit 5 electrically connected to the transducers.

Embodiments of the consumption meter in accordance with the present invention comprise measuring means for measuring the quantity value. For an ultrasonic flow meter, the measuring means includes the ultrasonic transducers 2 as well as any means for determining the difference in arrival time of the emitted signals, and any means for converting and outputting the measured quantities to a consumed quantity value. Such means are typically in the form of an integrated electronic circuit 5 implemented on a PCB.

The electronic circuit 5 also comprises components for operating the consumption meter. The electronic circuit is supported by a plate, typically a PCB 6, this PCB is also referred to as the top PCB. The electronic circuit 5 illustrated on FIG. 2 does not show any specific electrical components, except for a display 7, however it is clear to the skilled person that such components are present. Moreover, the integrated electronic circuit 5 is schematically illustrated as a single unit attached to the PCB 6. However, it is to be understood that this representation is only for the purpose of illustration. Typically, the components of the electronic circuit 5 would be provided directly on the PCB 6. As an example, the illustration of the display 7, should not be construed as if the display is attached to a single unit 5, while this may be the case in certain situations, in a typical situation, the display would be a part of the electronic circuit 5 and attached directly on the top PCB 6.

FIG. 2 illustrates the measuring means 2, 5, the electronic circuit 5, a transmitter 8, a power supply 15, the display 7, as well as any carrier PCBs or plates housed by the casing.

FIG. 1 illustrates in a schematic perspective view, a consumption meter in accordance with embodiments of the present invention. The outer part of the casing may be made in a polymer material. A number of suitable casing materials are not transparent, therefore in order to ensure visual connection to a display 7, a transparent area may be provided, the transparent area may be in the form of an entire transparent cover 9, or a cover 9 comprising a transparent region 10.

The consumption meter may further comprise a transmitter 8 for transmitting the quantity value, e.g. in the form of an antenna formed on a side PCB 13. Specific requirements to the antenna are known to the skilled person. In the context of embodiments of the present invention, any suitable antenna may be provided for wireless transmission of the quantity value. In an embodiment, the antenna may also be used for receiving signals, so that a two-way communication link to the consumption meter may be established. The antenna 8 may be electrically connected to the electronic circuit 5 via the top PCB.

The consumption meter may further comprise a power supply 15 for powering the consumption meter, here in the form of a battery attached to a side PCB 14. The battery 15 is electrically connected to the electronic circuit 3 via the top PCB. The top PCB, and the two side PCBs may collectively be referred to as the carrier PCBs. In embodiments, the power supply may also be provided via an attached supply wire (not show), such as a grid supply wire introduced into the consumption meter via a leak tight connection.

As illustrated in FIG. 2, the casing 3 comprises at least two components or parts, a first polymer-based casing part 11 having a first water permeability and an at least second casing part 12 having an at least second water permeability. The first polymer-based casing part 11 is typically the outer part, and it is typically fabricated in a robust solid polymer material, sufficiently robust to stand normal handling of the consumption meter, such as handling in connection with installation of a consumption meter.

The first casing part may be made in a mouldable polymer material, such as a material suitable for injection moulding.

The second casing part 12 may be provided by coating the first casing part 11. The coating may be done by any suitable technique.

In an embodiment, in a first step the first polymer-based casing part is injection moulded. A number of possible ways of providing the at least second casing part exists.

In an embodiment, the coating may be done by a second moulding step. For example, while the first casing part is in the mould, this first casing part may be used as a mould for a second injection moulding step. In such an embodiment, the second casing part is a material suitable for moulding, such as a second polymer material.

In an embodiment, the first casing part is removed from the mould and introduced in to a thin film deposition chamber. In the thin film chamber, preferably the inner side of the first casing part may be covered by a thin film. It may be ensured that only the inner side may be covered by use of a line-of-sight technique or the outside may be shielded prior to the deposition process.

The second layer may also be sprayed onto the inside of the first casing layer, for example by spraying or by other means providing a layer of paint, a layer of rubber, a layer of tar, a layer of paint comprising a filler material or a layer of resin.

In an embodiment, the at least second casing part may be provided by CVD, such as PE-CVD, e.g. for providing a layer of a layer of glass material, a layer of metal, a layer of ceramic, a layer of silicon oxide or a layer of silicon nitride.

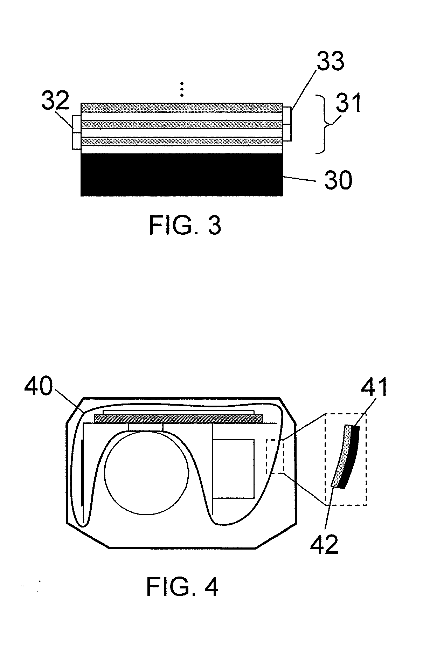

FIG. 3 illustrates an embodiment wherein multiple casing parts are present in the form of a stack of layers 31, the stack of layer being provided onto the inner-side of the first casing part 30. The stack of layers may be a stack comprising an alternate stacking of at least two materials. In an embodiment, the stack is provided by an alternate stacking of a polymer 32 and silicon oxide 33, either silicon di-oxide or mono-oxide. A layer of silicon oxide and other glass types are known to form pin-holes when deposited onto a polymer surface. By providing alternate silicon oxide layers and polymer layers, the number of pin-holes may at least to a large extend be removed, or their effect eliminated.

Each layer in the stack of layers may have a thickness in the range of 10 nanometers to 5 micrometer, such as 100 nanometers to 1 micrometer, such as 250 nanometers to 750 nanometers, such as 500 nanometers. Layers or groups of layers need not be of equal thickness. For example, in a stack comprising alternating layers of a polymer material and silicon oxide, the polymer material may be provided with a larger thickness than the silicon oxide layers. Thicknesses in the lower end of the ranges may be preferred in embodiments.

In general, the thickness of the first casing part may range between a fraction of a millimeter and up to few millimeters.

FIG. 4 illustrates an embodiment wherein the second casing part comprises a metal foil in the form of a metal coated 42 polymer-based bag 41.

As illustrated in FIG. 1, the consumption meter may comprise a transparent area, or a cover, 14 for establishing visual contact to a display or for enabling optical communication. The transparent area may be provided in the first polymer-based casing part prior to providing the at least second casing part. The transparent area may be a glass window which is leak-tightly mounted into the first casing part, e.g. by, welding, gluing or by use of a seal. The transparent area may be fixed by means of fixing means, such as by means of a collar holding sealing means, such as one or more O-rings, and fixed by screws. It may be an advantage to use an O-ring based sealing, since this allows a dismount of the casing of the consumption meter.

The transparent area may also be of a transparent polymer material having a first and a second part in accordance with the present invention. In such an embodiment, the transparent area and the rest of the casing may separately be provided with a first and an at least second casing part and combined at a later process step. Suitable transparent materials for the first part of the transparent area may be TPU, PET, PC or acrylic (PMMA).

If the transparent area is provided prior to providing the at least second casing part, e.g. by deposition of the at least second casing part, in order to maintain the transparency of the area, the at least second casing part may be of a material composition which is at least semi-transparent.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A consumption meter for measuring a quantity value corresponding to a consumed quantity, the consumption meter comprising
- a measuring means for measuring the quantity value;
- an electronic circuit for operating the consumption meter; and
- a casing for housing the measuring means and the electronic circuit;
wherein the casing comprising a first polymer-based casing part having a first water permeability and an at least second casing part having an at least second water permeability, the first polymer-based casing part enveloping the second casing part, and wherein the at least second water permeability is lower than the first water permeability.

2. The consumption meter according to claim 1, wherein the second water permeability is 10 times lower than the first water permeability, such as between 10 and 100 times lower.

3. The consumption meter according to any of the preceding claims, wherein the first casing part is made in a mouldable polymer material.

4. The consumption meter according to any of the preceding claims, wherein the material of the first casing part is a fibre reinforced polymer material.

5. The consumption meter according to any of the preceding claims, wherein the first casing part comprises a material selected in the group of: PolyPhenylene Sulfide (PPS), Polyether Sulphone (PSU), PolyPhenylene Sulfone (PPSU), PolyPhenylene Oxide (PPO), PolyStyrene (PS), PolyEthylene Imine (PEI), PolyButylene Terephthalate (PBT), Parylene, Polyester, Acrylonitrile Butadiene Styrene (ABS), PolyButylene Terephthalate (PBT), Liquid Crystal Polymer (LCP), CycloOlefin Copolymer (COC), PolyMethyl MethAcrylate (PMMA), PolyPropylene (PP), PolyEthylene (PE), PolyTetraFluoroEthylene (PTFE), PolyPhenylene Ether (PPE), PolyStyrene (PS), PolyCarbonate (PC), PolyEtherImide (PEI), PolyEtherEtherKetones (PEEK), Polyethylene Terephtalate (PET), PolyAmide (PA), Thermoplastic Polyurethane (TPU) and blends thereof.

6. The consumption meter according to any of the preceding claims, wherein second casing part is a coating of the first casing part.

7. The consumption meter according to claim 6, wherein the coating is done by a thin film deposition technique.

8. The consumption meter according to claim 6, wherein the coating is a layer selected from the group of: a layer of paint, a layer of rubber, a layer of tar, a layer of paint comprising a filler material, a layer of glass material, a layer of metal, a layer of ceramic, a layer of polymer, a layer of resin, a layer of metal oxide, a layer of silicon oxide, and a layer of silicon nitride.

9. The consumption meter according to any of the preceding claims, wherein multiple casing parts are present in the form of a stack of layers.

10. The consumption meter according to any of the preceding claims, wherein second casing part comprises a metal foil.

11. The consumption meter according to any of the preceding claims, wherein the second casing part is a bag.

12. The consumption meter according to claim 11, wherein the bag is a polymer-based bag coated with a metal film.

13. The consumption meter according to any of the preceding claims, wherein the consumption meter further comprising one or more of the following housed by the casing: a power supply for powering the consumption meter, a transmitter for transmitting the quantity value, a display, the display being operatively connected to the electronic circuit, an optical communication unit, the optical communication unit being operatively connected to the electronic unit.

14. The consumption meter according to any of the preceding claims, wherein the at least first polymer-based casing part comprising a transparent area.

15. An flow meter for measuring a medium flow through a flow passage, the flow meter comprising a consumption meter according to any of the preceding claims and a flow passage, the consumption meter being connected to the flow passage.
